## Europäisches Patentamt
## European Patent Office
## Office européen des brevets

(19)

(11) Veröffentlichungsnummer: **0 107 609**
**B1**

(12) ## EUROPÄISCHE PATENTSCHRIFT

(45) Veröffentlichungstag der Patentschrift:
**26.11.86**

(51) Int. Cl.⁴: **C 21 C 5/32**, C 21 C 5/38

(21) Anmeldenummer: **83630158.0**

(22) Anmeldetag: **23.09.83**

(54) **Verfahren und Einrichtung zum Beheizen eines mit Schrott beschickten Stahlbades.**

(30) Priorität: **27.09.82 LU 84390**

(43) Veröffentlichungstag der Anmeldung:
**02.05.84 Patentblatt 84/18**

(45) Bekanntmachung des Hinweises auf die Patenterteilung:
**26.11.86 Patentblatt 86/48**

(84) Benannte Vertragsstaaten:
**AT BE DE FR GB IT NL SE**

(56) Entgegenhaltungen:
**EP-A-0 022 548**
**EP-A-0 028 998**
**EP-A-0 030 360**
**DE-A-1 458 906**
**FR-A-2 244 821**
**FR-A-2 457 325**
**FR-A-2 463 187**
**LU-A-40 218**

(73) Patentinhaber: **ARBED S.A., Avenue de la Liberté 19, L-2930 Luxembourg (LU)**

(72) Erfinder: **Schleimer, François, 3 rue Bessemer, L-4032 Esch/Alzette (LU)**

(74) Vertreter: **Neyen, René, Administration Centrale de l'Arbed Case postale 1802, L-2930 Luxembourg (LU)**

EP 0 107 609 B1

## Beschreibung

Die Erfindung betrifft ein Verfahren zum Beheizen eines mit grossen Mengen Schrott beschickten Stahlbades, sowie die hierfür erforderliche Einrichtung.

Zum Aufschmelzen grosser Schrottmengen wurden bereits mehrere Verfahren vorgeschlagen, von denen im Rahmen der vorliegenden Erfindung diejenigen Verfahren relevant sind, bei denen die hierzu erforderliche Energie nicht integral aus Fremdquellen stammt, wie dies bei der Verwendung von Gas- oder Plasmabrennern bzw. von Induktions- oder Widerstandsheizungen der Fall ist.

Der Anmelder hat in seinen luxemburgischen Patenten LU 81.207 und LU 81.859 eingehend beschrieben, wie man sich der Nachverbrennungswärme des durch Entkohlen von Stahlbädern freiwerdenden CO sinnvoll bedienen kann, um grössere Mengen an Schrott einzuschmelzen. Ferner hat der Anmelder in seiner Patentanmeldung LU 83.814 erläutert, wie man den Stahlbad durch gezieltes Aufkohlen, also von einer Fremdquelle her, eine zusätzliche Energiekapazität vermittelt.

Während die Praxis die Wirtschaftlichkeit dieser Verfahren bestätigt, bleibt für den Stahlwerker die Frage einer sinnvollen Verwendung der Konverterabgase bestehen. In dieser Hinsicht erteilt die FR-A-2.463.187 die Lehre, im Rahmen eines kombinierten Sauerstoff-Aufblas/Bodenspül-Verfahrens zum Bodenspülen u.a. Konverterabgase zu verwenden. Obwohl es generell bekannt ist, solche Gase als Brenngase zu verwenden, auch um hiermit Schrott vorzuheizen, wird in der o.e. Druckschrift eher auf die durch die Verwendung von Konverterabgas erzielte Einsparnis an teurem Inertgas Wert gelegt, als auf die Ausnutzung der im Abgas enthaltenen brennbaren Anteile.

Der Anmelder hat sich die Aufgabe gestellt ein Verfahren und eine Einrichtung vorzuschlagen, die es erlauben, ein mit grossen Mengen Schrott beschicktes Stahlbad im Rahmen des Frischprozesses zu beheizen, wozu die in den unverbrannten Konverterabgasen enthaltene Energie in sinnvoller Weise genutzt werden soll, um das Heranziehen von Fremdenergie so weit wie möglich zu vermeiden.

Diese Aufgabe wird erfüllt durch das Verfahren nach der Erfindung, das vorsieht, dass man das Stahlbad mit Sauerstoff frischt wobei Kohlenmonoxyd gebildet wird und dass man dieses in bekannter Weise mit Hilfe von weich aufgeblasenem Sauerstoff unmittelbar über der Badoberfläche teilweise verbrennt. Das neue Verfahren sieht vor, dass man im Verlauf der Entkohlungsphase die Konverterabgase abzieht, kühlt, reinigt, trocknet, sammelt und aufbereitet. Das Merkmal des Verfahrens besteht darin, dass man in einer anschliessenden Phase einen Teil des aufbereiteten Gases verdichtet, mit einem Energieträger belädt und es zusammen mit Sauerstoff auf die Oberfläche des Stahlbades bläst. Hierbei wird einerseits darauf geachtet, dass der Sauerstoff erst unmittelbar nach dem Verlassen des Lanzenkopfes zugemischt wird, andererseits muss die Gasströmung so eingestellt werden, dass die Zündung erst 0,5-1 m nach dem Lanzenausgang erfolgt.

Es handelt sich demnach um einen teilweisen Ersatz von Fremdenergieträgern durch eine Rückführung von Konverterabgas in den Prozess, als Heizgas, wobei diese Rückführung in einer direkten Ausnutzung der unverbrannten und noch stark CO-haltigen Abgase besteht, die normalerweise nur indirekt, d.h. ausserhalb des Frischprozesses erfolgt.

Von den Konverterabgasen ist, energiebezogen gesehen, nur die Fraktion interessant, die beim Entkohlen des Roheisens entsteht. Aber auch diese Fraktion enthält ausser CO noch $CO_2$, letzteres in wechselnden Anteilen, je nach dem Nachverbrennungsgrad des CO-Gases, sowie angesaugte Luft, so dass die Gefahr besteht, dass einerseits die Energiekapazität des Gases nicht befriedigend ist und andererseits, dass das Gas eine zu hohe Stickstoffkonzentration aufweist.

Leider steigt die Löslichkeit von Stickstoff im Stahl mit der Temperatur, so dass es zweckmässig ist, den Stickstoffgehalt des rück-Beführten Gases auf ein Minimum zu beschränken.

Gemäss einer bevorzugten Ausführungsform kann man dem Gas beim Aufblasen auf das Stahlbad festen Kohlenstoff zufügen, wie z.B. gekörntes Anthrazit, Koksgrus, Holzkohle u.dgl. Hierdurch erreicht man zweierlei: Erstens wird das Bad je nach Menge an Kohlenstoff aufgekohlt und hierdurch energetisch aufgestockt; zweitens werden beim Auftreffen der Kohlenstoffpartikel auf die Badoberfläche flüchtige Bestandteile frei und tragen zum Zurückdrängen der Stickstoffkonzentration gerade an der Phasengrenze bei, wo diese von Wichtigkeit ist. Hierzu muss das Gas, um seiner Funktion als Trägergas für Feststoffe gerecht zu werden, auf Drucke in der Grössenordnung von rund 15 bar verdichtet werden.

Eine geeignete Einrichtung besteht insbesondere aus den bekannten Aggregaten zum Kühlen, Reinigen, Trocknen und Sammeln. An die Sammelstation ist erfindungsgemäss ein kontinuierlich arbeitendes CO-Gehalt-Messgerät angeschlossen, das mit einem Rechner verbunden ist. Letzterer übernimmt die Bestimmung der Menge an zuzuführendem Kohlenstoff, sowie die Steuerung der entsprechenden Aggregate, nämlich einer Dosiervorrichtung, (vorzugsweise eine an und für sich bekannte Zellenrad-Durchblasschleuse), in der die Zugabe an Feststoffen in eine Transportleitung, mit unter Druck stehendem Gas, durch Regelung der Zellenradumdrehungen gesteuert wird.

Die Dosiervorrichtung befindet sich nach dem Verdichter, in dem das mit Kohlenstoff anzureichernde Abgas auf ca. 15 bar verdichtet wird.

Zum Aufblasen des aufbereiteten Abgases auf das Stahlbad dient zweckmässigerweise eine spezielle Aufblaslanze, bspw. von der Art, wie der Anmelder sie in seiner luxemburgischen Patentanmeldung LU 84.176 beschrieben hat.

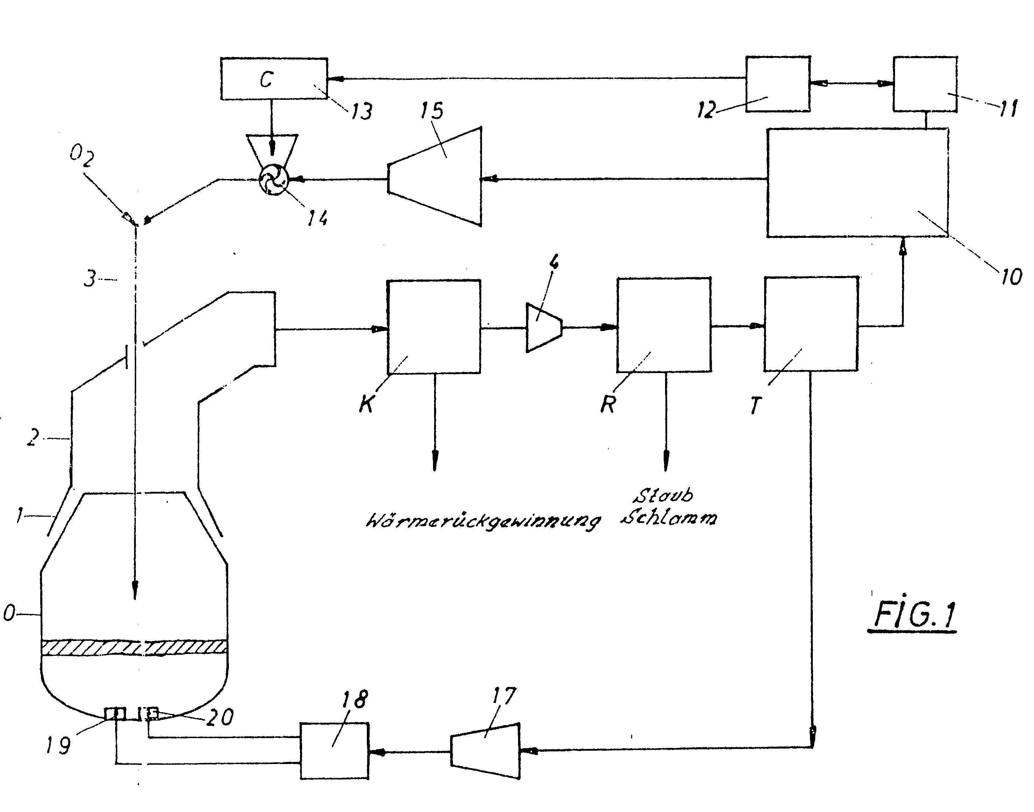

Zur besseren Uebersicht dient die Zeichnung, in der die Fig.1 ein Schema der Gesamteinrichtung zeigt.

Man erkennt den Stahlwerkskonverter 0 mit seiner absenkbaren Haube 1, die in den Kamin 2 mündet, durch welchen eine Blaslanze 3 auf und ab bewegt werden kann. Anschliessend an den Kamin sind in der Reihenfolge des Gasdurchtritts, bewirkt durch eine Gasförderturbine 4, schematisch Aggregate zum Kühlen (K), zum Reinigen (R) und zum Trocknen (T) des Abgases dargestellt. Das Abgas gelangt in die Sammelstation 10, an die das CO-Bestimmungsgerät 11 angeschlossen ist. Dieses gibt Meßsignale an den Rechner 12, der die zum Erreichen eines minimal erforderlichen Heizwertes notwendigen Mengen an zuzufügenden Energieträgern je nach Roheisen- und Schrottmengen berechnet.

Ferner erkennt man das schematisch dargestellte Aggregat 13 das zum Anliefern von Kohlenstoff dient und das vom Rechner 12 gesteuert wird. Das Gas gelangt in den Verdichter 15 und wird über eine Dosiervorrichtung 14, vorzugsweise eine Zellenrad-Durchblasschleuse durch die dosierte Mengen an gekörntem Kohlenstoff eingespeist werden, in die Blaslanze 3 geleitet.

Selbstverständlich kann man, bei Betreiben eines kombinierten Blasprozesses bei dem Sauerstoff von oben und Spülgas von unten der Schmelze zugeführt werden, vorsehen, dass man die Konverterabgase auch zum Durchspülen verwendet. In diesem Fall werden dieselben direkt ab Trockenstation über den Verdichter 17 in das Verteilersystem 18 und von dort aus durch individuelle gasdurchlässige Baukörper 19, 20 in die Schmelze geleitet.

Die Erfindung erlaubt den Einsatz erhöhter Mengen Schrott, wobei die zum Schmelzen desselben erforderliche Energie zum Teil von systemeigenen Mitteln, nämlich dem CO im Konverterabgas geliefert wird. Fremdenergie wird zu einem relativ geringen Anteil benötigt.

Zum Erläutern der energetischen Verhältnisse, die beim Rückführen bestimmter Mengen an Konverterabgas herrschen, sollen die folgenden rechnerischen Ueberlegungen dienen:

Betrachten wir einen 180-Tonnen Konverter, ausgerüstet mit einer absenkbaren Haube. Der Verbrennungsfaktor des Abgases beträgt 0.1.

Empirisch ermittelt wurde, dass im Verlauf der Abgas-Sammelphase pro Charge 5046 Nm3 Gas entstehen und dass beim Einführen von 3000 kg Anthrazit das Abgas ein Volumen von 8621 Nm3 aufweist. Demnach entsprechen 3000 kg Anthrazit einem Mehrvolumen von 3575 Nm3 Abgas.

Wird erfindungsgemäss ein gewisser Teil des Fremdenergieträgers durch rückgeführtes Abgas ersetzt, so ändern sich die Volumina sowie die zur Verfügung gelangenden Energiemengen.

Zum Rechnen sollen folgende praxisnahe Begriffe dienen:

X: Der auf 3000 kg Anthrazit bezogene Anteil an tatsächlich eingeführtem Anthrazit.

Q: Der Anteil an rückgeführtem Abgas bezogen auf die gesamte Menge an entstehenden Abgas.

EC: Wärmemenge verfügbar aus 3000 kg eingeführtem Kohlenstoff.

EG: Wärmemenge verfügbar aus 1 Nm3 rückgeführtem Abgas.

Dies vorausgesetzt, stellt sich die Energiebilanz für den Fall eines teilweisen Ersatzes von Kohlenstoff durch rückgeführtes Abgas wie folgt dar:

$$EC = X. EC + Q. EG (5046 + 3575 X)$$

Betrachten wir 1 Nm3 Abgas, zusammengesetzt aus 0.85 Nm3 CO und 0.15 Nm3 $CO_2$. Bei einem $\lambda$-Wert von 0.1 benötigt nan zur CO-Oxydation $(0.85. 0.1)/2 = 0.0425$ Nm3 Sauerstoff was einen Ballast von 0.16 Nm3 Stickstoff mit sich bringt.

Das hieraus resultierende Gas enthält:

$0.85. 0.9 = 0.765$ Nm3 CO, sowie 0.16 Nm3 N2 und 0.235 Nm3 C02.

In der Folge wird die Zusammensetzung des entstehenden Abgases berechnet für die Fälle, in denen Q verschiedene Werte annimmt und zwar 0.1, 0.3, 0.5 und 1. Ferner werden aus den jeweiligen CO-Gehalten der Betrag EG und mit Hilfe der obigen Gleichung, der Wert von X berechnet:

| Q | 0.1 | 0.3 | 0.5 | 1 |
|---|---|---|---|---|
| CO (%) | 60.72 | 52.40 | 46.09 | 35.42 |
| N2 (%) | 13.79 | 13.79 | 13.79 | 13.79 |
| CO2 (%) | 25.49 | 33.81 | 40.12 | 50.81 |
| EG (kcal/Nm3) | 1179 | 919 | 721 | 388 |
| X | 0.846 | 0.669 | 0.585 | 0.560 |

Diese Ermittlung der jeweiligen X-Werte erlaubt es, die folgende Tabelle aufzustellen:

| Q | 0.1 | 0.3 | 0,5 | 1 |
|---|---|---|---|---|
| Kohlenstoff (kg) | 2539 | 2008 | 1755 | 1680 |
| Gas verbrannt (Nm3) | 540 | 2231 | 3569 | 7048 |
| Gas abgezogen (Nm3) | 10162 | 10858 | 11847 | 15222 |
| Wärmekapazität (kcal/Nm3) | 1830 | 1579 | 1389 | 1067 |

Es überrascht, dass man beim Rückführen von nur 540 Nm3 Abgas bereits 461 kg Kohlenstoff einspart, während man zum Einsparen von rund 1000 kg Kohlenstoff schon 2231 Nm3 Abgas rückführen muss.

Mithin bringt das erfindungsgemässe Rückführen von Konverterabgas in den Konverter Vorteile mit sich, indem man teure Fremdenergieträger einspart, wobei der Fachmann allerdings zu bedenken hat, dass steigende Mengen an rückgeführtem Abgas nicht im gleichen Mass fallenden Mengen an eingesparten Fremdenergieträgern entsprechen.

## Patentansprüche

1. Verfahren zum Beheizen eines mit grossen Mengen Schrott beschickten Stahlbades, wobei man das Bad mit Sauerstoff frischt und man im Verlauf der Entkohlungsphase die Konverterabgase abzieht, kühlt, reinigt, trocknet, sammelt und aufbereitet, dadurch gekennzeichnet dass man in einer anschliessenden Phase einen Teil des aufbereiteten Gases verdichtet, mit einem Energieträger belädt und zusammen mit Sauerstoff so auf die Badoberfläche aufbläst, dass die Zündung erst 0,5-1m nach dem Lanzenausgang erfolgt.

2. Verfahren nach Anspruch 1, dadurch gekennzeichnet, dass der Energieträger ein Kohlenstoffträger ist.

3. Verfahren nach Anspruch 1 oder 2, dadurch gekennzeichnet, dass der Energieträger aus gekörntem Anthrazit, Koksgrus oder Holzkohle besteht.

4. Verfahren nach den Ansprüchen 1-3, dadurch gekennzeichnet, dass man das aufbereitete Gas vor dem Aufblasen auf rund 15 bar verdichtet.

5. Verfahren nach den Ansprüchen 1-3, dadurch gekennzeichnet, dass man zusätzlich einen Teil des Gases zum Durchspülen des Bades verwendet.

6. Einrichtung zum Durchführen des Verfahrens nach den Ansprüchen 1-4, bestehend aus Aggregaten zum Kühlen, Reinigen und Trocknen von Abgasen sowie einer nachgeschalteten Sammelstation, dadurch gekennzeichnet, dass an die Sammelstation ein kontinuierliches CO-Messgerät verbunden mit einem Rechner zur Ermittlung der zum Erreichen des erforderlichen Heizwertes notwendigen Zugabemenge an Energieträgern angeschlossen ist und dass eine rechnergesteuerte Dosiervorrichtung zum Zuführen von Energieträgern an das Gas und eine Vorrichtung zum Verdichten desselben unmittelbar vor dem Einführen in die Blaslanze zwischen der Sammelstation und der Blaslanze angeordnet ist.

## Claims

1. A process for heating a steelbath to which there is added scrap in large quantities, wherein the bath is refined with oxygen and wherein the converter gases of the decarburizing period are withdrawn, cooled, filtered, dried and conditioned, characterized in that a further period comprises compressing a part of the conditioned gas, adding an energy bearing material and blowing these together with oxygen onto the surface of the bath so as to ensure that ignition occurs 0,5 to 1 m away form the lance end.

2. A process as described in claim I, characterized in that the energy bearing material is a carbonaceous material.

3. A process as described in claims 1 or 2, characterized in that the energy bearing material is granular anthracite, coke dust or lignite.

4. A process as described in claims 1 to 3, characterized in that a part of the gas is compressed to about 15 bars prior to blowing.

5. A process as described in claims 1 to 3, characterized in that a further part of the gas is used as a purging gas within the converter.

6. An installation for carrying out the process described in claims 1 to 4, which comprises means for cooling, filtering and drying gases plus a gas collector, characterized in that said gas collector has an instrument for continuously determining CO that is linked to a processor for calculating the amounts of energy bearing material that are necessary in view of obtaining a sufficient thermal capacity and in that there are mounted between said collector and the blowing lance computerized means for metering energy bearing material into the gas and means for compressing the gas at the very entrance of the blowing lance.

## Revendications

1. Procédé pour le chauffage d'un bain d'acier auquel on ajoute de grandes quantités de mitrailles, dans le cadre duquel on affine le bain à l'aide d'oxygène et l'on poursuit la phase de décarburation en soutirant les gaz de convertisseur que l'on soumet à une épuration, un séchage, un stockage et un conditionnement, caractérisé en ce que l'on prévoit une phase supplémentaire au cours de laquelle on comprime une partie des gaz conditionnés, que l'on ajoute à ces gaz un porteur d'énergie et que l'on les souffle ensemble avec de l'oxygène sur la surface du bain et ceci de manière à ce que l'allumage n'intervienne que 0,5 à 1 m en aval de la sortie de la lance.

2. Procédé suivant la revendication 1, caractérisé en ce que le porteur d'énergie est une matière carbonée.

3. Procédé suivant la revendication 1 ou 2, caractérisé en ce que le porteur d'énergie est de l'anthracite granulé, du poussier de coke ou de la lignite.

4. Procédé suivant les revendications 1 à 3, caractérisé en ce que l'on comprime le gaz avant le soufflage à environ 15 bars.

5. Procédé suivant les revendications 1 à 3, caractérisé en ce que l'on utilise en plus une partie des gaz en tant que gaz de barbotage pour le convertisseur.

6. Installation pour la mise en oeuvre du procédé suivant les revendications 1 à 4, comprenant des moyens de refroidissement, d'épuration et de séchage de gaz, ainsi qu'une unité de stockage, caractérisée en ce que la dite unité comporte un instrument de mesure continue de CO qui est relié à un calculateur capable de déterminer la quantité en porteur d'énergie nécessaire pour aboutir à un pouvoir calorifique suffisant et qu'il est disposé entre l'unité de stockage et la lance de soufflage, un doseur commandé par un ordinateur et qui fournit le porteur d'énergie au gaz, ainsi que des moyens de compression des gaz, immédiatement à l'entrée de la lance de soufflage.

Staub
Schlamm

Wärmerückgewinnung

*FIG.1*